# EUROPEAN PATENT SPECIFICATION

(11) **EP 2 794 066 B1**
(45) Date of publication and mention of the grant of the patent: **14.08.2019**
(21) Application number: 12810499.9
(22) Date of filing: 17.12.2012
(51) Int. Cl.: B01D 53/22, B01D 69/10, B01D 69/12, B01D 69/02, B01D 67/00, C01B 3/50

(54) **A METHOD OF MAKING A HYDROGEN SEPARATION COMPOSITE MEMBRANE**
VERFAHREN ZUR HERSTELLUNG EINER WASSERSTOFFTRENNUNGS-VERBUNDMEMBRAN
PROCÉDÉ DE FABRICATION D'UNE MEMBRANE COMPOSITE DE SÉPARATION DE L'HYDROGÈNE

(30) Priority: 19.12.2011 US 201161577479 P
(43) Date of publication of application: 29.10.2014
(73) Proprietor: Shell Internationale Research Maatschappij B.V., 2596 HR The Hague (NL)
(72) Inventor: SAUKAITIS, John Charles, Katy, Texas 77450 (US)
(74) Representative: Shell Legal Services IP
(86) International application number: PCT/US2012/070064
(87) International publication number: WO 2013/096183

(56) References cited:
- WO-A1-2006/034086
- WO-A1-2009/105394
- WO-A2-2008/127406
- US-A1- 2006 260 466
- US-A1- 2008 105 613
- US-A1- 2009 277 331

## Description

### Background of the Invention

This invention relates to a method of making a gas separation system. In particular the invention relates to a method of making a gas separation system that is particularly well suited for the separation of hydrogen gas from a stream of mixed gasses.

Inexpensive sources of purified gases are needed for many industrial applications. Hydrogen is an example of such a gas. Inexpensive sources of purified hydrogen are sought after for many industrial chemical processes and in the production of energy in fuel cell power systems. Similarly, inexpensive methods of purifying hydrogen could significantly expand the applicability of hydrocarbon reforming, reforming reactors and the water gas shift reaction. To meet the need for inexpensive purified hydrogen, considerable research has been devoted to developing more effective hydrogen permeable gas separation membrane systems that can be used to selectively recover hydrogen from different industrial gas steams containing hydrogen and other gases.

Gas separation systems utilizing thin noble metal membranes are known in the art. In particular, those incorporating palladium membranes have been studied widely due to their high hydrogen permeability and their theoretically infinite hydrogen selectivity. Palladium gas separation membranes are the subject of several issued patents and published patent applications.

One problem experienced with palladium membranes is the cracking of the membranes during their use and/or production. Cracks in a palladium membrane allow for unwanted gases to pass through the membrane and to contaminate the product gas stream. While there may be a number of possible causes of membrane cracking, it is believed that the annealing conditions during their manufacture contribute to the cracking.

In known manufacturing processes for gas separation systems one or more thin layers of a noble metal (e.g., palladium) are deposited on a porous support, which may or may not have had some degree of pretreatment. The composite system (support and metal membrane) is then annealed (i.e., held at elevated temperatures under specific conditions) to help fuse and temper the individual components. One such annealing treatment is discussed in U.S. Patent 7,727,596 to Ma et al., and comprises annealing newly formed palladium containing membranes in the presence of hydrogen at temperatures up to 250° C and at pressures ranging up to 8 bar. Membranes annealed in such conditions have been observed to crack during use. The cracking is likely due, at least in part, to the presence of both the alpha and beta forms of palladium hydride in the membrane. The alpha and beta forms have different crystalline sizes. WO 2006/034086 A1 discloses to anneal a gas selective palladium membrane in the presence of hydrogen at temperatures of 200-250°C. WO 2009/105394 A1 discloses to anneal a gas selective palladium alloy membrane in an inert atmosphere at 200-800°C to prevent membrane cracking.

Cost is another issue that may always be a driver of research for gas separation systems, especially palladium based systems. Noble metal based gas separation systems are expensive to manufacture. Accordingly, any improvements in the art that improve manufacturing efficiencies can be very valuable and system manufacturers devote considerable resources to finding such improvements.

In summary, there is need for a method of making a gas separation system that reduces or eliminates some of the functional problems (e.g., membrane cracking) seen in systems produced by known manufacturing processes. In addition, there is a need for a manufacturing process that is more economically efficient than known methods (e.g., requires less palladium or fewer plating steps).

However, manufacturing efficiency cannot be increased at the expense of function. In many applications the purity of the gas product is paramount and cutting corners in the manufacture of gas separation systems often results in a system that cannot meet industrial demands. Therefore, manufacturers must find a proper balance between efficiency and function. Often times this requires a holistic approach to process improvement. In other words, changing one aspect of manufacturing process may result in an increase in efficiency, but combining that change with other downstream changes may act as a multiplier in overall manufacturing efficiency and product performance. The research underlying the present invention is based on such a holistic approach.

There is provided a method of making a gas separation system, according to claim 1, wherein said method comprises providing a porous metal support having a first mean pore size. The porous support has a first surface and a second surface with each surface being opposed to the other to thereby define a support thickness. The "first surface", as that term is used herein, means the surface of the porous support that will ultimately support the thin membrane of gas separation material and any intermediate diffusion barrier situated between the first surface and the thin membrane.

The method also comprises contacting the first surface of the support with a first particulate material having a first mean particle size to form a first coated surface on a coated support then removing any excess first particulate material from the first coated surface.

The method further comprises contacting the first coated surface with a second particulate material having a second mean particle size that is less than the first mean particle size to form a second coated surface on the coated support followed by removing excess second particulate material from the second coated surface.

The method also comprises a deposition step and an annealing step. In the deposition step, at least one layer of a gas selective material is deposited so as to overlie the coated first surface and any particulate matter located in between. In the annealing step, the coated support and the gas selective material deposited thereon are annealed at a temperature that encourages grain growth of the gas selective material.

Additionally, described herein is method of making a gas separation system where the method comprises the step of providing a porous metal support having a first surface and a second surface with each surface being opposed to the other to thereby define a support thickness. The first surface of the support has a measurable initial surface roughness and an initial mean pore size. The first surface of the support is then contacted with a first particulate material having a first mean particle size that is less than the initial mean pore size to form a first coated surface on a coated support. The excess first particulate material is removed from the first coated surface.

The method further comprises the step of contacting the first coated surface with a second particulate material having a second mean particle size that is less than the first mean particle size to form a second coated surface on the coated support. The excess second particulate material is then removed from the second coated surface.

The method further comprises the step of contacting said second coated support with a third particulate material having a third mean particle size that is less than the second mean particle size to form a third coated surface wherein the measured surface roughness of the third coated surface is less than the measured surface roughness of the first coated surface.

### Brief Description of the Drawings

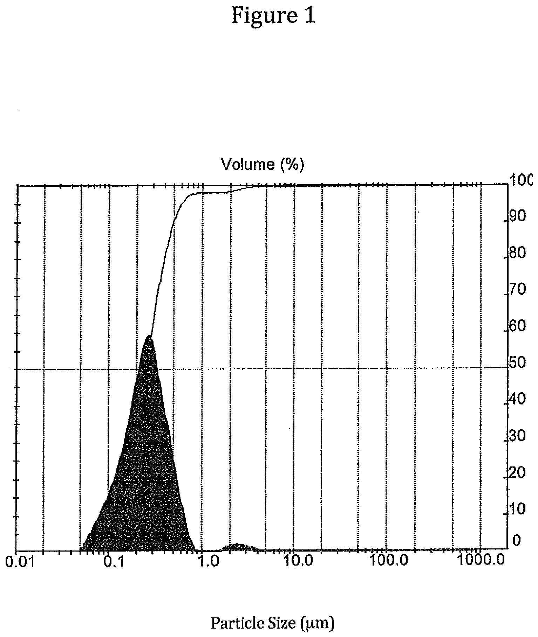

Figure 1 is a graph showing a particle size distribution of one particulate material used in the examples where the X axis represents particle size, the left Y axis is a general representation of the number of particles counted at a specific size, and the right Y axis represents the total volume of the measured sample.

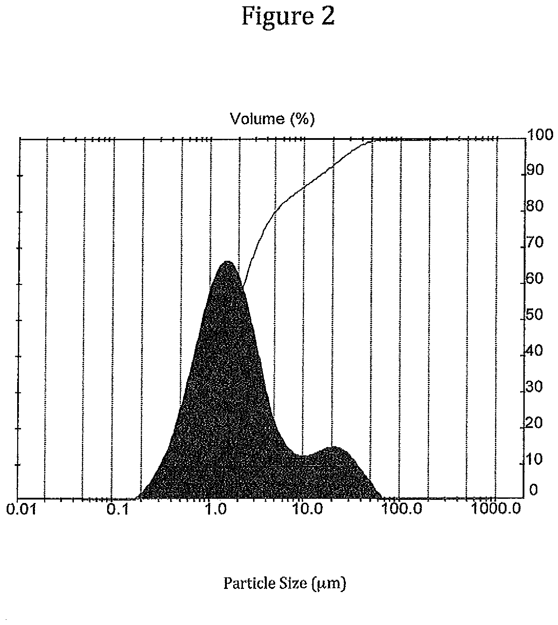

Figure 2 is a graph showing a particle size distribution of one particulate material used in the examples where the X axis represents particle size, the left Y axis is a general representation of the number of particles counted at a specific size, and the right Y axis represents the total volume of the measured sample.

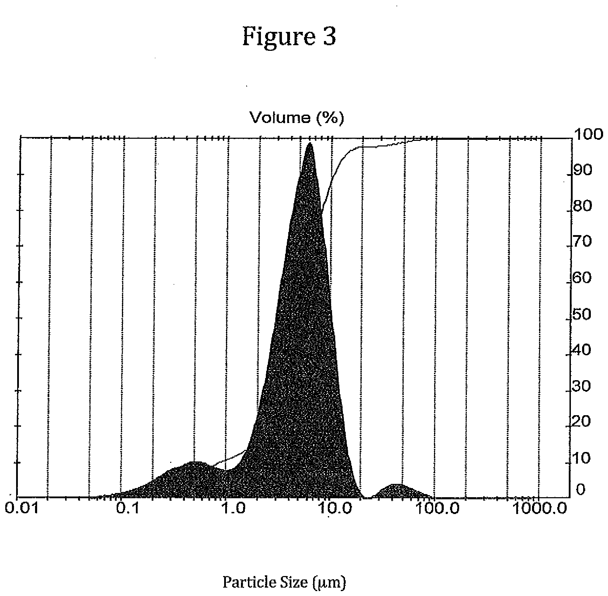

Figure 3 is a graph showing a particle size distribution of one particulate material used in the examples where the X axis represents particle size, the left Y axis is a general representation of the number of particles counted at a specific size, and the right Y axis represents the total volume of the measured sample.

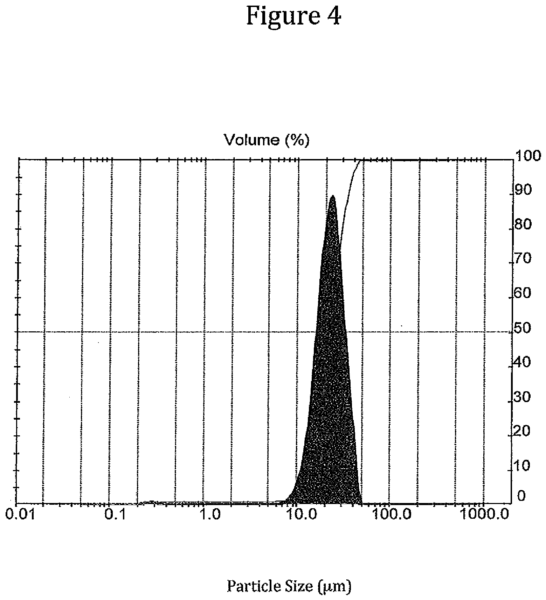

Figure 4 is a graph showing a particle size distribution of one particulate material used in the examples where the X axis represents particle size, the left Y axis is a general representation of the number of particles counted at a specific size, and the right Y axis represents the total volume of the measured sample.

### Detailed Description of the Invention

In the following description, for purposes of explanation, numerous details are set forth, such as exemplary concentrations and alternative steps or procedures, to provide an understanding of one or more embodiments of the present invention. However, it is and will be apparent to one skilled in the art that these specific details are not required to practice the present invention.

Furthermore, the following detailed description is of the best presently contemplated mode of carrying out the invention. The description is not intended in a limiting sense, and is made solely for the purpose of illustrating the general principles of the invention. The various features and advantages of the present invention may be more readily understood with reference to the following detailed description.

As an initial matter, and as an aid to the reader, several terms are defined and a very general description of a gas-separation system is presented.

Generally speaking, a gas separation system consists of gas permeable porous support upon which successive layers of thin metal films and/or other materials are deposited to form a composite membrane that is impermeable to liquids and specific gases. One or more intermediate structures, such as an intermediate diffusion barrier, may reside between the metal film and the support to enhance the performance of the system.

As used herein the terms "overlie" and "underlie" are terms that are used to describe the relative relationship of one element of a device or system to another. Both terms can be interpreted to mean that one element of a device or system is adjacent to another element but might be separated by intermediate elements. For example, a membrane can overlie the first surface of a porous support while having an intermediate diffusion barrier sandwiched in between the membrane and first surface. Furthermore, holding the support "upside down" or "right side up" does not alter the meaning of "overlie" and "underlie".

The term "liquid dense" as used herein is a descriptive term applied to a gas-separation membrane system during its manufacture. The term "liquid dense" means that the gas-separation membrane has reached a density such that a liquid (usually water) can no longer travel through its pores upon the application of a pressure differential across the thickness of the membrane and the support upon which it rests. In many instances a membrane is considered "liquid dense" if water is not pulled through the membrane upon the application of a vacuum, e.g. a pressure differential that is below atmospheric pressure of up to about 760 mm Hg.

A "gas-selective material", as the term is used herein, is a material that is selectively permeable to a gas when it is in the form of a dense, thin film, and thus, a dense thin layer of such material will function so as to selectively allow the passage of a selected gas while preventing passage of other gases. The term includes gas-selective metals, particularly noble metals.

The term "gas tight" or "gas dense" as used herein are descriptive terms applied to a gas-separation membrane system during its manufacture. The terms "gas tight" or "gas dense", as used herein mean that the membrane allows for permeation of a specific gas through it but with little, if any, other gas being allowed through it. Thus, the membrane will have high "selectivity" for the specific gas. In many instances the specific gas is hydrogen.

As the term is used herein, "selectivity" is a measured attribute of a membrane or membrane system that is represented by the dimensionless ratio of the flux of a specific gas through the membrane divided by the flux of a leak detecting gas such as nitrogen or helium through the membrane. The term "flux", as used herein, means the rate at which a gas can flow through a membrane at a given pressure. The dimensions used to measure flux can vary depending upon the measurement device used. Typically, flux is measured as m³/(m² hr bar). In the manufacture of high purity hydrogen, an ideal gas selective membrane would have a selectivity that approaches infinity, but, practically, the selectivity relative to nitrogen for a membrane is normally in the range of from 100 to 1,000.

The term "stability" when used in reference to a gas selective membrane means that the membrane may be used in the separation of a specific gas (e.g., hydrogen) from a gas mixture for a lengthy period of time even under reasonably harsh high-temperature and pressure conditions and not develop leaks. Thus, a highly stable membrane has a reasonably low rate of decline in its selectivity during its use.

The roughness of the various surfaces that are encountered in the manufacture of a gas separation system, particularly the roughness of a porous support as an intermediate diffusion barrier is applied, is an important aspect of the inventive method. Applicant has determined that the reduction of the measurable surface roughness of a porous support prior to metal deposition provides for efficiencies in the manufacturing process and improvements in the performance of the resulting gas separation system.

The roughness of a surface may be measured or determined by using any of the methods or means known to those skilled in the art. One example of equipment means for measuring a surface profile to quantify its roughness is a profilometer. Any commercially available profilometer may be used, such as the optical profilometer, identified as the ST400 Optical Profilometer, which is marketed and sold by Nanovea.RTM. This unit may be used to measure, analyze and quantify the surface morphologies and topographies of certain user defined surfaces.

The roughness parameters that may be used to define surface roughness include such parameters as the mean surface roughness or arithmetical mean height (Sa), root mean square height or RMS surface roughness (Sq), skewness of the height distribution (Ssk), kurtosis of the height distribution (Sku), maximum peak height (Sp), maximum pit height, also referred to as maximum valley depth, (Sv), and maximum height (Sv). These roughness parameters are well known to those skilled in the art of measuring and characterizing the roughness and other features of surfaces. These particular parameters characterize a surface based on its vertical deviations of its roughness profile from the mean line.

Turning now to the method according to the invention, the invention relates to a method of preparing a gas separation system. More specifically, the invention relates to an economically advantageous method of manufacturing a gas separation system having an exceptionally thin membrane layer of at least one gas-selective material. Also described are the resulting gas separation membrane system from such manufacturing method, and the use thereof.

In very broad terms, the claimed invention is a method of making a gas separation system that includes the steps of (1) sequentially treating or coating a porous metal support with particulate materials to reduce surface roughness and functional mean pore size, (2) depositing a thin metal membrane on the coated porous substrate, and (3) annealing the substrate and membrane under conditions that reduce or eliminate cracking of the membrane during commercial use.

The method according to the invention begins with the provision of a porous support. The porous support used in the preparation of the gas separation membrane system of the invention or any elements thereof may include any porous material that is gas permeable (e.g., hydrogen permeable) and is suitable for use as a support for the layer(s) of gas-selective material that will be deposited thereon. The porous support may be of any shape or geometry provided it has a surface that permits the application thereto of a layer of intermetallic diffusion barrier particles (discussed below) and a layer of gas-selective material. Such shapes may include planar or curvilinear sheets of the porous material. Preferably the porous support has a first surface (e.g., a top surface) and a second surface (e.g., undersurface) opposed to each other to thereby define a support thickness. Alternatively, the shape of the support can be tubular, such as, for example, rectangular, square and circular tubular shapes that have a first surface (e.g., outside surface) and a second surface (e.g., inside surface) that together define a support thickness and with the inside surface of the tubular shape defining a tubular conduit. The porous support, particularly the first surface of the porous support is also characterized as having a first mean pore size.

The porous support may comprise any suitable porous metal material selected from any of the materials known to those skilled in the art including, but not limited to, the stainless steels, such as, for example, the 301, 304, 305, 316, 317, and 321 series of stainless steels, the twenty or more HASTELLOY® alloys, for example, HASTELLOY® B-2, C-4, C-22, C-276, G-30, X and others, and the INCONEL® alloys, for example, INCONEL® alloy 600, 625, 690, and 718. Thus, the porous support may comprise an alloy that is hydrogen permeable and which comprises chromium, and, preferably, further comprises nickel. The porous metal material may further comprise an additional alloy metal selected from the group consisting of iron, manganese, molybdenum, tungsten, cobalt, copper, titanium, zirconium, aluminum, carbon, and any combination thereof.

One particularly desirable alloy suitable for use as the porous metal material may comprise nickel in an amount in the range of upwardly to about 70 weight percent of the total weight of the alloy and chromium in an amount in the range of from 10 to 30 weight percent of the total weight of the alloy. Another suitable alloy for use as the porous metal material comprises nickel in the range of from 30 to 70 weight percent, chromium in the range of from 12 to 35 weight percent, and molybdenum in the range of from 5 to 30 weight percent, with these weight percents being based on the total weight of the alloy. The Inconel alloys are preferred over other alloys.

In preferred embodiments, the porous supports utilized in the practice of the invention are cylindrical. Such cylindrical porous substrates are commercially available from several sources known to those skilled in the art such as the Mott Corporation of Farmington, Connecticut.

As is known by those skilled in the art, porous supports can be made using techniques that incorporate compression of metallic particles. In the case of cylindrical porous supports the compression forces that aid in forming the porous support can be applied from the "outside-in" or from the "inside-out". In outside-in compression, the force vectors applied to the cylindrical porous support are applied to the outside (or first) surface of the support. In inside-out compression, the direction of compression is the opposite. The force vectors are applied to the inside surface of a cylindrical porous support.

In preferred embodiments the cylindrical porous supports utilized in the practice of the invention are manufactured using inside-out compression. Inside-out compression is preferred because under traditional manufacturing techniques such compression typically imparts a smoother initial outer (or first) surface (the surface upon which the metal membrane is deposited) than does outside-in compression.

Outside-in compressed supports may also be used. However, if outside-in supports are used, it may be preferable to have them "ground and reactivated" prior to initiating the method according to the invention. As noted above, these types of supports tend to have a somewhat rougher surface as compared to inside-out supports. "Grinding and reactivation" is a technique known to those skilled in the art. Generally speaking, it is essentially a sanding/polishing step or steps that occur prior to deposition of an intermediate diffusion barrier. Grinding and reactivation is designed to reduce the surface roughness of the outside-in support to make it closer to the range of roughness usually seen on inside-out supports. The grinding and reactivation step is optional but preferred for very rough supports because it can reduce the number of particulate contacting steps later. The method according to the invention works well with outside-in and other types of supports which highlight one of the benefits of the invention. It is quite flexible and can be used on a range of different supports with different initial surface roughness.

The initial surface roughness of the porous supports utilized in the practice of the invention can vary and depend in part on the manufacturer and the material from which the porous support is made. It is believed that it is possible for the initial surface roughness of the porous support to be too smooth which would be indicative of a porous support with a small mean pore size. As discussed below, such porous supports would likely possess an initial gas flux that is too small to be of practical use in a commercial setting and pose problems with membrane adherence. Therefore, it is preferred that the initial surface roughness (Sa), i.e. mean surface roughness or arithmetical mean height, of the first surface of the porous support be less than about 10 µm, and, generally in the range between 0.05 µm and 10 µm. A more preferred initial surface roughness (Sa) for the first surface of the porous support is less than 8 µm, and, generally in the range between 0.1 µm and 8 µm. A particularly preferred initial surface roughness for the first surface of a porous support is less than 5 µm, and, generally in a range between 2 µm and 4 µm.

The thickness (e.g. wall thickness or sheet thickness, as described above), porosity, and pore size distribution of the pores of the porous support are properties of the porous support selected to provide a gas separation membrane system that has the desired performance characteristics and other desired properties. It may be desirable to use a porous support having a reasonably small thickness so as to provide for a high gas flux therethrough.

The thickness of the porous support for the typical application contemplated hereunder may be in the range of from about 0.05 mm to about 25 mm, but, preferably, the thickness is in the range of from 0.1 mm to 12.5 mm, and more preferably, from 0.2 mm to 5 mm.

The term porosity, as used herein, is defined as the proportion of non-solid volume to the total volume (i.e. non-solid and solid) of the porous support material. The porosity of the porous support may be in the range of from 0.01 to 1.0. A more typical porosity is in the range of from 0.05 to 0.8, and, even from 0.1 to 0.6.

The pore size distribution of the pores of the porous support may vary with the mean pore diameter typically being in the range of from about 0.1 µm to about 50 µm. More typically, the mean pore diameter is in the range of from 0.1 µm to 25 µm, and, most typically, from 0.1 µm to 15 µm, with 0.3 µm to 5 µm being a preferred range.

The practice of the inventive method includes the reduction of the mean pore size of the porous support and the reduction of measurable surface roughness of the first surface of the porous support. This is accomplished, at least in part, by the sequential application of intermetallic diffusion barrier particles to the first surface of a porous support prior to deposition of a gas selective metal ion thereon. The creation of an intermetallic diffusion barrier on a porous support is known in the art. However, using the process of creating an intermetallic diffusion barrier to specifically alter the measurable surface roughness of a porous support represents advancement in the production of gas separation systems.

As background, an original purpose of intermetallic diffusion barriers was to prevent or substantially eliminate diffusion of the metal atoms in the porous support into the thin noble metal membrane deposited on the porous support. Such diffusion can compromise the selectivity of the membrane. It was discovered that applying a thin layer of relatively inert particulate materials to the porous support prior to deposition of the gas separation membrane helped prevent unwanted diffusion. The method according to the invention is an advancement of this basic purpose.

In the process according to the invention, the intermetallic diffusion barrier is formed by sequentially contacting at least two differently sized a particulate materials with the first surface of the porous support. In doing so, the mean pore size of the porous support is reduced and the measurable surface roughness of the porous support is reduced.

The particulate materials used in the practice of the invention are those normally used in the formation of an intermetallic diffusion barrier. Such materials can be selected from the group consisting of inorganic oxides, refractory metals, noble metal eggshell catalysts and combinations thereof. These particles should be of a size so that they, or at least a portion of the particles, can fit, at least partially, within certain of the pores of the porous support. Thus, the particles generally should have a maximum mean particle size of less than about 50 µm.

It should be recognized that the particulate materials utilized in the practice of the invention may be of non-uniform shape. Some may be spherical. Some may be cylindrical. Some may be irregular. Therefore, determining the "mean particle size" of any one particulate material depends upon the dimension that is measured and/or the exact protocol for determining the particle size distribution curve. The protocol for obtaining a size distribution curve can vary depending on the device used to measure particle size. For purposes of this detailed description, particle size measurements and distributions were determined using a Mastersizer laser scattering analyzer (mode MAM 5005, Malvern Instruments Ltd., Worchestershire, UK).

To determine particle size, a small quantity of particulate material was dispersed in water and analyzed by the Mastersizer device. The particle size distribution was monitored during five successive readings. The mean particle size for the particulate material was then expressed as the mean volumetric size D4,3 (De Brouckere mean diameter), which is the mean diameter of a sphere with the same volume. This is a known technique for characterizing particle size. Accordingly, as used herein the term "mean particle size" can be considered to be the mean diameter of the particulate material in question, keeping in mind that the actual shape of the particle is likely somewhat irregular.

Examples of inorganic oxides that may be used in forming the layer of intermetallic diffusion barrier particles include alumina, silica, zirconia, titania, ceria, silicon, carbide, chromium oxide, ceramic materials, and zeolites, among others. The refractory metals may include tungsten, tantalum, rhenium, osmium, iridium, niobium, ruthenium, hafnium, zirconium, vanadium, chromium and molybdenum, among others. As for the noble metal eggshell catalyst that may be used in forming the layer of intermetallic diffusion barrier particles, such noble metal eggshell catalysts are defined and described in great detail in commonly assigned U.S. Patents 7,744,675 and 7,998,247.

As noted above, the intermetallic diffusion barrier is formed as a sequential application of particles to the first surface of the porous support. Broadly speaking, the support is contacted with a first particulate material, then a second particulate material, then a third, and so on. The first particulate material has a mean particle size (the first mean particle size) that is less than the mean pore size of the porous support. Likewise the mean particle size of the second particulate material (the second mean particle size) is less than the first mean particle size; and the mean particle size of a third particulate material (the third mean particle size) is less than the second mean particle size; and so on.

Coating the surface of the porous support with sequentially smaller particles gradually fills in the pores of the support without completely clogging them and creates a smoother support surface. In this manner an intermediate diffusion barrier is created.

Turning now to the specifics of the method according to the invention, the method comprises the step of contacting the first surface of the porous support with a first particulate material having a first mean particle size that is less than the first mean pore size of the porous support to thereby form a first coated surface on a coated support.

In the manufacture of the gas separation device of the invention, a layer of particulate material is brought into contact with the first surface of the porous substrate by any suitable method known to those skilled in the art for applying a particulate material (e.g., powder) to a porous surface. For example, the particulate material may be applied to the surface of the porous substrate by transport with a gas, or by application of a paste, a slurry or suspension of the particulate material, or by pressing or rubbing a powder of the particulate materials upon the surface of the porous substrate.

In preferred embodiments at least one of the contacting steps is conducted while applying a pressure differential of a higher pressure and a lower pressure across the support thickness with the higher pressure being applied to the side of the first surface of the support. The application of the pressure differential can be accomplished through use of a negative pressure (i.e., vacuum applied to the second surface of the support), or a positive pressure (i.e., pressure applied to the first surface of the support), or a combination of the two. In preferred embodiments the particulate material is deposited as a slurry under the application of a vacuum to the second surface of the porous support.

The quantity and size of particulate material applied to the first surface of the porous support can vary somewhat depending on the method utilized to deposit the particulate material. The primary goal in the application of particulate material is to completely cover the surface of the porous support that will ultimately support the deposited gas separation membrane.

After the particulate material is placed in contact with the first surface of the porous support to form a first coated surface any excess first particulate material that is present on the support is removed. The method of removal may vary depending upon the method of application but in most instances it is envisioned that the excess will be removed by friction (e.g., mechanical or hand rubbing). Preferably, the step of removing the excess particulate material is conducted while a vacuum is applied to the second surface of the support (the surface opposite the applied particulate material). If the particulate material was deposited using a wet process (e.g., slurry or suspension) the coated support should be dried prior to removing the excess particulate material to avoid removing slabs of wet particulate cake which may pull particulate material from the pores of the porous support.

The application of the particulate material should be conducted to reduce the mean pore size of resulting coated porous support and to reduce the surface roughness of the porous support. Achieving these goals involves addressing several variables in the selection of the particulate material (e.g., choice of particulate material, method of application, particle size, etc.)

In light of the foregoing, the choice of the first mean particle size of the first particulate material is an important variable that must be addressed. Using a first particulate material having too small of a mean particle size can result in clogging the pores of the porous substrate which will reduce the initial mean pore size of the support but may also reduce the gas flux of the porous substrate to a level that is not commercially feasible. Thus, the first mean particle size of the first particulate material applied to the first surface of the porous support generally should be less than or equal to the initial mean pore size of the support but not so small as to reduce the gas flux through the support to unacceptable levels.

Similarly, the mean particle size of the first particulate material should be chosen so that after its application (and removal of the excess) the measurable surface roughness of the first coated surface of the porous support is less than the initial surface roughness of the first surface of the porous support.

In summary, the initial steps of the method according to the invention comprise (1) providing a porous support having an initial mean pore size and initial surface roughness and (2) applying a first particulate material to a first surface of the porous support to (a) functionally reduce the mean pore size of the support and (b) functionally reduce the measurable surface roughness of the support.

The method according to the invention includes sequential repetition of the above discussed steps for at least one additional iteration. Therefore, the invention includes the step of contacting the first coated surface of the coated support with a second particulate material having a second mean particle size that is less than the first mean particle size of the first particulate material to form a second coated surface on the coated support. The excess second particulate material is then removed in the same or similar manner as before.

This second contacting step places the second particulate material in the small crevices and pores remaining after the first contact step and the same considerations governing the choice of particle size for the first particulate material are equally applicable to the second particulate matter. The mean particle size of the second particulate material should be chosen so that the second particulate material fits within the remaining small pores but does not completely clog them. This results in the second coated surface having a mean pore size that is less than the mean pore size of the first coated surface, a measurable second surface roughness that is less than the previously measured first surface roughness, and an acceptable gas flux.

In preferred embodiments the method according to the invention further comprises conducting a third contacting step. The third contacting step comprises contacting the second coated support with a third particulate material. The third particulate material has a third mean particle size that is less than the second mean particle size but is not so small as to decrease the gas flux to an unacceptable level. The third contacting step forms a third coated surface on the coated support having a measurable third surface roughness that is preferably less than the second surface roughness.

The above contacting steps may be repeated using successively smaller particulate sizes until the terminal contacting step is conducted at which point the multi-coated porous support attains the desired measured surface roughness and/or the desired gas flux.

The terminal step of contacting forms a final coated surface. In preferred embodiments of the method according to the invention, a wiping of the excess does not follow the last application of particulate matter. Leaving the excess after the terminal contacting step helps prevent exposure of any underlying metal, which could diffuse into any subsequently deposited thin membrane. The coated support then proceeds through the remainder of the process which can include a particulate securing step and a deposition step.

The type and size of particulate matter and the method of contacting the particulate matter may be the same or different for any given contacting step.

Those skilled in the art will readily recognize that there is significant room for variation in the above described steps, particularly in choosing the type and size of particulate material for any given step.

Generally, the size of the diffusion barrier particles (i.e., the maximum dimension of the particle) is chosen in light of the pore size distribution of the pores of the porous support used in the preparation of the gas separation system. Thus, the appropriate particle size can vary and be above 50 µm if necessary or desired. Typically, the mean particle size of the inorganic oxides, refractory metals or noble metal eggshell catalysts will be in the range of from 0.05 µm to 60 µm or greater if necessary. This range encompasses all of the particles that may be applied to the support.

Since the method incorporates the sequential application of increasingly smaller sized particles, the particle sizes used for each subsequent layer of particulate material that is applied should be smaller than the previously applied particles. Desirably, the mean size of the first particulate material should be in the range of 8 µm to 60 µm, preferably, in the range of from 10 µm to 50 µm, and, more preferably, of from 12 µm to 40 µm.

A desirable mean particle size for the second application of particulate material can be in the range of from 1 µm to 12 µm, preferably, in the range of from 2 µm to 10 µm, and, more preferably, of from 3 µm to 8 µm.

For the third application of particles, it is desirable for the mean particle size to be in the range of from 0.5 µm to 30 µm, but, a preferred range for the mean particle size of the particles of the third application is from 1 µm to 10 µm, and, more preferred, from 2 µm to 8 µm.

For the fourth application of particles, the mean particle size should be in the range of from 0.05 µm to 1 µm, preferably, of from 0.08 µm to 0.9 µm, and, most preferably, of from 0.1 µm to 0.8 µm. The application of particles below the 1 µm mean particle size is primarily for the fine tuning of the surface characteristics of the porous support and, thus, the fourth application may not always be a necessary step. The necessity of the fourth application is dependent upon the resulting surface roughness of the coated surface subsequent to the previously applied particles.

Determining the optimal and most economically efficient combination of particle sizes for any given application of the method according to the invention can be determined by those skilled in the art. An exemplary distribution of particles for sequential application is shown in the examples. Note that the particle size distribution and sequence of application shown in the examples represent just three of many possible combinations.

In preferred embodiments of the method according to the invention, a securing step is conducted after the final particulate material contacting step. This securing step may incorporate any process step that operates to secure the previously deposited particulate material to the porous support. This step can take several forms depending upon the type of particulate material utilized.

In preferred embodiments the securing step comprises a short electroless plating reaction. Electroless plating reactions are discussed in some detail below. This step comprises placing the coated support in a plating solution containing a gas selective metal ion and conducting the reaction just long enough to secure the attachment of the particulate material to the porous support. Typically the reaction time for the securing step is less than a minute. The securing step can be conducted under a very slight vacuum as discussed in the section addressing electroless plating but care must be taken not to pull too much of the gas selective metal material into the porous support. This securing step need not create a continuous layer gas selective material on the coated support and is thus differentiated from a more complete deposition or plating step.

The end result of the contacting steps and the securing step is a graded intermediate diffusion barrier having a range of particle sizes wherein the majority of the largest particles are proximate to and/or embedded in the first surface of a porous support and the majority of the smallest particles are generally further away from the first surface as compared to the larger particles. In preferred embodiments the size and quantity of the particulate material results in an intermediate diffusion barrier having a thickness greater than about 0.01 µm, and, generally in the range of from 0.01 µm to 25 µm, but it is preferred for the layer thickness to be in the range of from 0.1 µm to 20 µm, and most preferably, from 1 µm to 5 µm.

As noted previously, another benefit of the method according to the invention is that it results in a porous support that has a final measurable surface roughness that is less than the initial surface roughness. Knowing the surface roughness is an important data point for the production of gas separation systems. If the surface of the underlying support is too rough, more expensive gas selective material is needed to fill in the "valleys", which drives up costs. If the underlying support is too smooth, then the deposited gas selective material may not adhere to the support as well, which can lead to cracking and peeling of the membrane. A somewhat loose analogy is that a certain amount of support surface roughness is needed to act as "velcro" for the deposited gas separation material.

Additionally, a surface roughness below about 0.7 µm is an indicator that permeance of the coated support is too low (i.e., resulting gas flux will be too low - typically below 25 m³/ (m² hr bar). In preferred embodiments the measured surface roughness of the support prior to depositing one or more layers of gas selective material is between 0.1 µm and 3.5 µm, preferably between 1 µm and 2.5 µm and most preferably between 1.8 µm and 2 µm.

Turning now to the formation of the gas separation membrane, one or more layers of a gas-selective material are applied to overlie the first surface of the porous substrate.

A gas-selective material, as the term is used herein, is a material that is selectively permeable to a gas, and, thus, an overlayer of such a material will function to selectively allow the passage of a selected gas therethrough while preventing passage of other gases. Possible gas-selective metals include noble metals, preferably palladium, platinum, gold, silver, rhodium, rhenium, ruthenium, iridium, niobium, and alloys of two or more thereof. In a preferred embodiment of the invention, the gas-selective material is a hydrogen-selective metal such as platinum, palladium, gold, silver and combinations thereof, including alloys. The most preferred gas-selective materials for hydrogen applications are palladium, silver and alloys of palladium and silver.

The gas-selective material is deposited onto the surface-treated porous substrate by any suitable means or method known to those skilled in the art. Possible deposition methods include electroless plating, thermal deposition, chemical vapor deposition, electroplating, spray deposition, sputter coating, e-beam evaporation, ion beam evaporation and spray pyrolysis. As used herein, the terms "electroless plating" or "plating" can be considered to be a particular subset of the various technologies used to deposit a gas selective material.

A preferred deposition method is electroless plating. An example of a suitable electroless plating method for deposition of the gas-selective material onto the coated porous substrate is that which is disclosed in Pub. No. US 2006/0016332. Another example of a suitable electroless plating method for deposition of the gas-selective material onto coated porous substrate is that which is disclosed in co-pending and co-assigned US Patent Application Serial No. 61/560,522.

Additional examples of suitable electroless plating methods for the deposition of gas-selective material are disclosed in US 7,390,536 and 7,727,596. Additional examples of electroless plating showing the effects of temperature, plating solution component concentrations, and spinning the porous support on the kinetics of Pd and Ag deposition are discussed in Ayturk, et. al., Electroless Pd and Ag deposition kinetics of the composite Pd and Pd/Ag membranes synthesized from agitated plating baths, Journal of Membrane Science, 330 (2009) 233-245 ("Ayturk Article").

In broad terms, an electroless plating process uses a redox reaction to deposit metal on an object without the passage of an electric current. Electroless technologies involve the reduction of a complexed metal using a mild reducing agent. For example, palladium deposition can occur by the following reaction:

2 Pd(NH₃)₄2Cl + H₂NNH₂ + 4NH₄OH -> 2Pd + N₂ + 8NH₃ + 4NH₄Cl + 4H₂O.

Generally speaking, in known electroless plating processes, a plating vessel is charged with a known quantity of a plating solution. The plating solution contains a known concentration of a gas-selective metal ion (e.g., palladium or gold) and other components. The article to be plated (e.g., a porous support) is then placed in the plating vessel in contact with the plating solution for a period of time. During this time the redox reaction occurs and a thin layer of the gas-selective metal is deposited on the article. Electroless plating is a preferred method of creating gas separation membranes because the plating solution bathes all parts of the object to be plated and tends to deposit metal evenly along edges, inside holes, and over irregularly shaped objects that are difficult to plate evenly with electroplating.

As an aid to the reader, electroless plating will be discussed in the context of the formation of a palladium membrane for separation of hydrogen gas from a mixed gas stream. This contextual aid is not to be interpreted as limiting the scope of the claims.

Once the desired porous support has been chosen and prepared with an intermetallic diffusion layer in the manner discussed above, the porous support is placed in a plating vessel containing a volume of a plating solution to begin the process of electroless plating. However, before discussing the mechanics of electroless plating according to the invention, it is necessary to discuss an optional step for preparing the porous support that has become standard practice in the art - pretreating or "seeding" of the porous support (also known as "activating" the support).

The "seeding" of the porous support comprises pretreating the porous support with particles of the chosen gas-selective material to provide nucleation sites, which aid in depositing subsequent layers of the gas-selective material. This pretreating can take several forms, some of which may overlap with the process of forming an intermetallic diffusion barrier. For example, in one embodiment of the invention, a porous support is pretreated by coating it with a layer of alumina or a stabilized form of zirconia, such as yttria stabilized zirconia containing palladium or gold.

Alternatively, a porous support can be pretreated by placing a layer of a noble metal eggshell catalyst on the surface of the porous support. A method for applying such a layer of eggshell catalyst to a porous support is taught in US Patent 7,744,675.

Similarly, pretreatment could take the form of applying a nanopowder or nanoparticle of a gas-selective metal or metal alloy to the surface of the porous support as described in US Patent 7,959,711.

A further method of pretreatment is to treat a porous support with a liquid activation composition. For example, a porous support can be immersed in an aqueous acidic solution of stannous chloride then immersed in an aqueous acidic palladium chloride bath to seed the surface with palladium nuclei. Treating a porous support with palladium salt followed by treatment with hydrazine is another method to deposit palladium nuclei on a porous support.

A still further method of pretreatment is to carry out a short plating reaction (discussed below) to "seed" the surface of the porous support with a small amount of the gas-selective material. In the method according to the invention this method of pretreatment is equivalent to the securing step discussed above.

Turning now to the electroless plating process, there is provided a plating solution having a concentration of a gas-selective metal ion. The gas-selective metal ion contained in the plating solution used in the practice of the invention may include any metal or metal alloy or mixture of alloyable metals that has the property of being selectively permeable to a gas when placed as a layer upon the surface of a porous support. It is preferred for the gas-selective metal to be hydrogen-selective.

The methods of forming such solutions are well known to those skilled in the art and need not be discussed in detail herein. Sample plating solutions include those with compositions as described in the Ayturk Article; US Patent 7,727,596; US Patent 7,390,536; US Patent 7,744,675; US Published Application 2009/0120293, and US Patent Application Serial No. 61/560,522. Typical plating solutions comprise a metal ion source (e.g., PdCl₂, Pd(NH₃)₄Cl₂, Pd(NH₃)₄Br₂, Pd(NH₃)(NO₃)₂), a complexing agent (e.g., ethylenediaminetetraacetic acid (EDTA), NH₄OH, or ethylenediamine (EDA)), a reducing agent (NH₂NH₂, NaH₂PO₂ H₂O, trimethylamine borane), stablizers and accelerators.

The porous support is placed into a plating vessel and brought into contact with the plating solution. The porous support is maintained in contact with the plating solution for a time period under conditions sufficient to promote the electroless deposition of the gas-selective metal ion from the plating solution onto the coated surface (e.g., outer surface) of the porous support.

The conditions sufficient to promote the electroless deposition, including temperature ranges, time, plating solution components, etc., are known to those skilled in the art and are discussed in the aforementioned patents, patent applications, and the Ayturk Article. These conditions may vary depending upon the process equipment and the particular goals of the manufacturer, but in many instances it is envisioned that the electroless plating steps will be carried out at temperatures in the range of from 20° C to 80°C, more preferably in the range of from 30° C to 70° C, and most preferably in the range of from 40° C to 60° C. Similarly, the time for conducting the plating reaction can vary over a wide range depending upon the other plating conditions. In preferred embodiments the plating reactions occur for a time ranging between 10 minutes to 3 or more hours. In preferred embodiments the reactions last between 30 minutes to 120 minutes. Reaction times between 45 minutes and 90 minutes are particularly preferred.

The application of a pressure differential across the support thickness during one or more of the plating steps has been shown to reduce the number of plating iterations required to achieve a gas tight membrane. Accordingly, preferred embodiments of the method according to the invention utilize the application of a pressure differential across the support thickness during one or more of the depositing/plating steps. In general terms, the application of a pressure differential consists of creating a higher pressure on one face of the porous support (the face upon which the gas-selective material is deposited) and a lower pressure on opposite face.

One manner of creating such a pressure differential is by the application of a vacuum to the face of the porous support opposite the face upon which the gas-selective metal is deposited (i.e., the second surface of the porous support). The vacuum draws more of the gas-selective metal into the pores of the porous support, which can aid in creating a gas-tight membrane in fewer steps. However, if too great of a vacuum is applied too early in the process or if a lesser vacuum is applied for too long, excess gas-selective metal can be drawn into the pores, which leads to filling the length of the pores with the gas selective material and making a very thick membrane that will have a lower permeability to hydrogen. In preferred embodiments, the vacuum is not applied until the annealed membrane layer is liquid dense, which aids in preventing too much gas-selective material being drawn into the porous support. One possible exception to this restriction on the application of a vacuum is during the securing step discussed previously. In that instance a weak vacuum may be applied to draw a small amount of gas selective material into the support.

Other possible methods of creating a pressure differential include the application of a positive pressure on the first surface of the porous support (i.e., applying pressure to the plating solution side of the support) or a combination of positive pressure and a vacuum. The creation of pressure differentials during electroless plating processes is discussed at some length in commonly assigned US Patent Application Serial No. 61/560,552.

To determine when the composite gas-selective membrane achieves liquid density, gas tight, and gas selective status, the annealed membrane layer or layers are tested periodically, preferably after each deposition step, although in commercial applications a more extended interval will likely be used. In preferred embodiments the annealed membrane layer is tested periodically to determine its density to liquid.

The typical method to test the density of the annealed membrane layer is by applying a defined level of vacuum to one surface of the porous support, typically the surface opposite the annealed membrane layer, while the porous support is exposed to a liquid, usually aqueous. If no water is drawn through the annealed membrane layer the system is considered liquid dense for that particular pressure differential.

After the plating reaction is conducted for the determined period of time the porous support and the deposited gas selective metal membrane are removed from the plating solution. Thereafter the support and the membrane are washed, dried, and annealed to provide an annealed supported membrane having an annealed membrane layer.

The annealing of deposited gas-selective material, particularly the noble metals, is known in the art. Two exemplary annealing processes are discussed in US Patent 7,727,596, and commonly assigned US Published Patent Application 2009/0120293.

The annealing process utilized in 7,727,596 is thought to be one possible cause of cracking of gas selective membranes either during manufacture or commercial use. More specifically, the '596 patent teaches an annealing step in which newly deposited gas selective material is annealed in the presence of hydrogen at temperatures at or below 250° C. It has been observed that membranes annealed under such conditions frequently crack during commercial use or during subsequent annealing steps thus becoming unsuitable for commercial use. This is probably due to the presence of the alpha and beta forms of palladium hydride. The alpha and beta forms have different crystal sizes and are known to cause palladium membranes to crack.

The method according to the invention utilizes a different annealing step. In the method according to the invention, each time the porous substrate is coated or plated with a layer of a gas-selective material the coated porous substrate is thereafter heat-treated, or annealed, in the presence of or under an inert gaseous atmosphere at lower temperatures. More specifically, the annealing takes place in the absence of hydrogen until the annealing temperature is at least 300° C and preferably at least 350° C. Once the annealing temperature reaches 300° C, and preferably 350° C, hydrogen and oxygen can be present in the annealing step. Stated alternatively, the annealing step is conducted in a hydrogen containing atmosphere but only after the temperature has reached a minimum of 300° C, preferably at least 350° C and more preferably at least 400° C. Although the annealing step can be taken to very high temperatures (e.g., 600° C or greater), in most instances the annealing step occurs at temperatures between 350° C and 550°C, and most preferably between 400° C and 500°C. In preferred embodiments hydrogen is purged from the system as the membrane cools between deposition steps. Typically, hydrogen is purged by flooding the system with an inert gas as the membrane starts to cool so that no hydrogen is present as the membrane reaches 300° C, preferably 400° C.

Possible inert gases that may be used in this heat treatment step include nitrogen, helium, argon, neon and carbon dioxide. The preferred inert gas for use in the annealing step is one selected from the group consisting of nitrogen, argon, neon and carbon dioxide, and, the most preferred inert gas for use in the heat treatment is nitrogen.

The gaseous atmosphere under which the annealing step is conducted should have some hydrogen in it once the annealing temperature reaches at least 300° C (preferably higher). The gaseous atmosphere used during the annealing step of the plated porous substrate should comprise a mixture of hydrogen from 3 to 100% and inert gas from 97 to 0%.

The annealing is conducted at a temperature that sufficiently treats the thin layer of gas-selective material (metal) that overlies the first surface of the porous substrate. While the required annealing temperature depends somewhat upon the particular metal or metal alloy that is plated upon the porous substrate and the thickness of the layer thereof, generally, the heat treatment temperature should be in the range of from at least 300° C to 800° C. The preferred heat treatment temperature is in the range of from 325° C to 700° C, and, most preferred, the heat treatment temperature is in the range of from 350° C to 550° C.

The annealing step is conducted for a period of time sufficient to provide the necessary treatment of the layer of gas-selective material and prepare it for the next series of plating, polishing and annealing. The annealing time period may, thus, be in the range upwardly to 48 or more hours, but, a typical annealing time period is in the range of from 0.1 hours to 12 hours. It is preferred, however, for the annealing time to be minimized to only such a time necessary to provide the treatment of the layer of gas-selective metal required to achieve the benefits of the invention. It is expected that such a time period is in the range of from 0.2 to 10 hours, or even in the range of from 0.3 hours to 4 hours.

The pressure under which the annealing is conducted can be in the range of from 0.51 bar (0.5 atmospheres (absolute)) to 20.3 bar (20 atmospheres). More typically, the heat treatment pressure is in the range of from 0.81 bar (0.8 atm) to 10.1 bar (10 atm).

Although research is ongoing to further define the benefits seen with the annealing steps according to the invention as compared to the annealing steps of the '596 patent, at this time it is thought that the grain growth parameters of the deposited metal increases membrane stability and helps it resist the change at elevated temperatures. For example, the '596 patent states that annealing at low temperatures in the presence of hydrogen slows or prevents palladium grain growth which theoretically leads to a more uniform covering of the substrate. In fact, those conditions tend to cause cracking of the palladium layer due to the coexistence of the alpha and beta forms of palladium hydride.

Applicant, on the other hand, has discovered that encouraging grain growth by increasing the annealing temperature appears to have a beneficial effect, particularly when the layers of gas selective material are polished between plating steps. The polishing step is discussed in more detail below. It is thought that there is some positive effect in polishing the grains to effectively smear them into the open pores and form a uniform metal layer. Gas separation systems formed in such a manner have been observed to resist cracking at high operational temperatures as compared to those formed by the method of '596 patent.

After annealing, the porous support with its annealed supported membrane layer is polished/abraded. The polishing improves the surface of the plated layer for further plating by minimizing surface abnormalities and deformities and by filling openings such as cracks, pinholes and other imperfections that may be present in the thin membrane layer. Exemplary abrading and polishing methods are disclosed in US Published Patent Application 2009/0120287.

The above steps of plating, washing, annealing and abrading are repeated until there is created a composite gas-selective membrane that is liquid dense, gas tight and gas selective.

To determine when the composite gas-selective membrane achieves liquid density, gas tight, and gas selective status, the annealed membrane layer or layers are tested periodically, preferably after each deposition step, or on a suitable schedule in commercial applications. The appropriate testing methods are known to those skilled in the art and need not be specifically described herein.

While it is best for the membrane system to have as high of a selectivity as possible, typically, an acceptable or desired selectivity for hydrogen, relative to nitrogen, carbon dioxide or methane, for the membrane system is at least about 100. More typically, the desired selectivity of a membrane system is at least 500, and most typically, the desired selectivity of the membrane system should exceed 1000. The selectivity of the membrane system may even exceed 5,000 or even exceed 10,000 and thus it is desirable for it to have such a selectivity.

The plating operation is duplicated as many times as is necessary to achieve the desired thickness of the gas selective metal layer onto the substrate. The typical thickness of the membrane layer supported upon the porous support can be in the range of from 0.001 µm to 30 µm, but for many gas separation applications, a membrane thickness in the upper end of this range may be too thick to provide for a reasonable gas flux that allows for a desired gas separation. Generally, a membrane thickness should be less than 20 µm, and preferably less than 10 µm. As mentioned previously, the claimed invention has shown the ability to achieve commercially acceptable membranes in fewer steps as compared to other known processes.

Lastly, the gas separation membrane system or elements thereof made by the inventive methods described herein may be used in the selective separation of a select gas from a gas mixture. The gas separation membrane is particularly useful in the separation of hydrogen from a hydrogen-containing gas stream, especially, in high temperature applications.

One example of a high temperature application in which the gas separation membrane system may be used is in the steam reforming of a hydrocarbon, such as methane, to yield carbon monoxide and hydrogen, followed by the reaction of the yielded carbon monoxide with water in a so-called water-gas shift reaction to yield carbon dioxide and hydrogen. These catalytic reactions are equilibrium type reactions and the inventive gas separation membrane is useful in the simultaneous separation of the yielded hydrogen while conducting the reactions in order to enhance the equilibrium conditions to favor hydrogen yield. The reaction conditions under which the reactions are simultaneously conducted can include a reaction temperature in the range of from 400°C to 600°C and a reaction pressure in the range of from 1 to 60 bars.

The following examples are provided to further illustrate the invention, but they are, however, not to be construed as limiting its scope.

### Example 1

This example demonstrates the reduction in surface roughness obtained by the method according to the invention. In this example an inside-out pressed cylindrical porous support made from 310 stainless steel was obtained from a commercial vendor. The initial surface roughness of the support was measured using a ST400 Optical Profilometer marketed and sold by Nanovea.RTM. The support was then contacted with the particulate material shown in Figure 2 using the slurry contacting method described above. After removal of excess particulate material a second contacting step with the particulate material of Figure 1 was conducted. The surface roughness results are shown in Table 1.

**Table 1**

| Inside-out Pressed 310 Stainless Steel Support | | |
|---|---|---|
| | Sa (µm) | Particulate Material |
| Untreated support | 2.550 | n/a |
| After 1^{st} contacting step | 1.898 | Figure 2 |
| After 2^{nd} contacting step | 1.240 | Figure 1 |

Subsequent to the particulate material contacting steps, a thin membrane of palladium was deposited on the treated support utilizing sequential electroless plating and polishing steps as described above. The resulting gas separation system was then tested at 15 psi and shown to exhibit a gas permeance of 26 m³/(m² hr bar) with no leak development. In addition the membrane was seen to be quite durable and did not crack under operational temperatures.

### Example 2

This example demonstrates the reduction in surface roughness obtained by the method according to the invention utilizing three contacting steps. In this example an inside-out pressed cylindrical porous support made from 310 stainless steel was obtained from a commercial vendor. The initial surface roughness of the support was measured using a ST400 Optical Profilometer marketed and sold by Nanovea.RTM. The support was then contacted with the particulate material shown in Figure 4 using the slurry contacting method described above. The contacting and associated steps were repeated two more times using the materials shown in Figures 3 and 2. The surface roughness results are shown in Table 2.

**Table 2**

| Inside-out Pressed 310 Stainless Steel Support | | |
|---|---|---|
| | Sa (µm) | Particulate Material |
| Untreated support | 5.145 | n/a |
| After 1^{st} contacting step | 4.917 | Figure 4 |
| After 2^{nd} contacting step | 3.368 | Figure 3 |
| After 3^{rd} contacting step | 1.964 | Figure 2 |

Subsequent to the particulate material contacting steps, a thin membrane of palladium was deposited on the treated support utilizing sequential electroless plating and polishing steps as described above. The membrane had a permeance of 35.5 m³/(m² hr bar) and did not show any increase in leak rate over the initial leak rate before testing which was < 1.0 cc/min at 15 psi. In addition the membrane was seen to be quite durable and no further leak development was noted under operational temperatures.

### Example 3

This example demonstrates the reduction in surface roughness obtained by the method according to the invention utilizing four contacting steps as described above. In this example, an inside-out pressed cylindrical porous support made from 310 stainless steel was obtained from a commercial vendor. The initial surface roughness of the support was measured using a ST400 Optical Profilometer marketed and sold by Nanovea.RTM. The support was then contacted with the particulate material shown in Figure 4 using the slurry contacting method described above. The contacting and associated steps were repeated three more times using the materials shown in Figures 3, 2, and 1. The surface roughness results are shown in Table 3.

**Table 3**

| Inside-out Pressed 310 Stainless Steel Support | | |
|---|---|---|
| | Sa (µm) | Particulate Material |
| Untreated support | 5.074 | n/a |
| After 1^{st} contacting step | 4.849 | Figure 4 |
| After 2^{nd} contacting step | 2.768 | Figure 3 |
| After 3^{rd} contacting step | 2.768 | Figure 2 |
| After 4^{th} contacting step | 1.727 | Figure 1 |

Subsequent to the particulate material contacting steps, a thin membrane of palladium was deposited on the treated support utilizing sequential electroless plating and polishing steps as described above. The membrane showed no leak when pressurized to 50 psi under nitrogen.

As many possible embodiments may be made of the invention without departing from the scope thereof, it is to be understood that all matter herein set forth is to be interpreted as illustrative and not in a limiting sense.

While the invention has been described with respect to a various embodiments thereof, it will be understood by those skilled in the art that various changes in detail may be made therein without departing from the scope and teaching of the invention. Accordingly, the invention herein disclosed is to be limited only as specified in the following claims.

## Claims

1. A method of making a gas separation system, said method comprising the steps of:
(a) providing a porous metal support having a first surface and a second surface with each said surface being opposed to the other to thereby define a support thickness, said first surface of said support having a first mean pore size;
(b) contacting said first surface of said support with a first particulate material having a first mean particle size that is less than said first mean pore size to form a first coated surface on a coated support;
(c) removing excess first particulate material from said first coated surface;
(d) contacting said first coated surface with a second particulate material having a second mean particle size that is less than said first mean particle size to form a second coated surface on said coated support;
(e) removing excess second particulate material from said second coated surface;
(f) depositing at least one layer of a gas selective metal to overlie said first surface of said support; and
(g) annealing said coated support and said at least one layer of gas selective metal wherein said annealing is conducted at a temperature that encourages grain growth of the gas selective metal, and wherein said annealing occurs in the absence of hydrogen until the annealing temperature reaches a set temperature, and in the presence of hydrogen when the temperature is above the set temperature, wherein the set temperature is at least 300° C.

2. A method according to claim 1 wherein at least one of said contacting steps is conducted while applying a pressure differential of a higher pressure and a lower pressure across said support thickness with said higher pressure being applied to the side of said first surface.

3. A method according to either claim 1 or claim 2 further comprising a third contacting step, said third contacting step comprising contacting said second coated surface with a third particulate material having a third mean particle size that is less than said second mean particle size to form a third coated surface on said coated support, said third contacting step occurring prior to said deposition step.

4. A method according to anyone of claims 1 through 3 wherein said first particulate material is selected from the group consisting of noble metal eggshell catalysts, refractory metals, inorganic oxides, and combinations thereof and said second particulate material is selected from the group consisting of noble metal eggshell catalysts, refractory metals, inorganic oxides, and combinations thereof.

5. A method according to anyone of claims 1 through 4 wherein the particulate material used in each contacting step can be the same or different.

6. A method according to anyone of claims 1 through 5 further comprising the step of drying the coated surface before excess particulate material has been removed.

7. A method according to claims 1 through 6 wherein said first coated surface has a measurable first surface roughness, said second coated surface has a measurable second surface roughness and said second surface roughness is less than said first surf ace roughness.

8. A method according to anyone of claims 1 through 7 wherein the measured surface roughness of the coated support prior to said deposition is **characterized by** a surface roughness (Sa) between 0.1 µm and 3.5 µm.

## Patentansprüche

1. Verfahren zum Herstellen eines Gastrennungssystems, wobei das Verfahren die folgenden Schritte umfasst:
(a) Bereitstellen eines porösen Metallträgers, der eine erste Oberfläche und eine zweite Oberfläche aufweist, wobei jede Oberfläche der anderen gegenüberliegt, um dadurch eine Trägerdicke zu definieren, wobei die erste Oberfläche des Trägers eine erste durchschnittliche Porengröße aufweist;
(b) Inkontaktbringen der ersten Oberfläche des Trägers mit ersten Feststoffen, die eine erste durchschnittliche Teilchengröße aufweisen, die geringer als die erste durchschnittliche Porengröße ist, um eine erste beschichtete Oberfläche auf einem beschichteten Träger auszubilden;
(c) Entfernen von überschüssigen ersten Feststoffen von der ersten beschichteten Oberfläche;
(d) Inkontaktbringen der ersten beschichteten Oberfläche mit zweiten Feststoffen, die eine zweite durchschnittliche Teilchengröße aufweisen, die geringer als die erste durchschnittliche Teilchengröße ist, um eine zweite beschichtete Oberfläche auf dem beschichteten Träger auszubilden;
(e) Entfernen von überschüssigen zweiten Feststoffen von der zweiten beschichteten Oberfläche;
(f) Auftragen von wenigstens einer Schicht eines gasselektiven Metalls, um über der ersten Oberfläche des Trägers zu liegen; und
(g) Glühen des beschichteten Trägers und der wenigstens einen Schicht eines gasselektiven Metalls, wobei das Glühen bei einer Temperatur durchgeführt wird, die ein Kornwachstum des gasselektiven Metalls fördert, und wobei das Glühen in Abwesenheit von Wasserstoff, bis die Glühtemperatur eine eingestellte Temperatur erreicht, und in Gegenwart von Wasserstoff erfolgt, wenn die Temperatur über der eingestellten Temperatur liegt, wobei die eingestellte Temperatur wenigstens 300°C beträgt.

2. Verfahren nach Anspruch 1, wobei wenigstens einer der Schritte des Inkontaktbringens durchgeführt wird, während eine Druckdifferenz eines höheren Drucks und eines niedrigeren Drucks über die Trägerdicke hinweg ausgeübt wird, wobei der höhere Druck auf die Seite der ersten Oberfläche ausgeübt wird.

3. Verfahren nach Anspruch 1 oder 2, ferner umfassend einen dritten Schritt des Inkontaktbringens, wobei der dritte Schritt des Inkontaktbringens das Inkontaktbringen der zweiten beschichteten Oberfläche mit dritten Feststoffen umfasst, die eine dritte durchschnittliche Teilchengröße aufweisen, die geringer als die zweite durchschnittliche Teilchengröße ist, um eine dritte beschichtete Oberfläche auf dem beschichteten Träger auszubilden, wobei der dritte Schritt des Inkontaktbringens vor dem Schritt des Auftragens erfolgt.

4. Verfahren nach einem der Ansprüche 1 bis 3, wobei die ersten Feststoffe aus der Gruppe ausgewählt sind, die aus Folgenden besteht:
Edelmetalleierschalenkatalysatoren, refraktären Metallen, anorganischen Oxiden und Kombinationen davon, und wobei die zweiten Feststoffe aus der Gruppe ausgewählt sind, die aus Folgenden besteht: Edelmetalleierschalenkatalysatoren, refraktären Metallen, anorganischen Oxiden und Kombinationen davon.

5. Verfahren nach einem der Ansprüche 1 bis 4, wobei die in jedem Schritt des Inkontaktbringens verwendeten Feststoffe gleich oder unterschiedlich sein können.

6. Verfahren nach einem der Ansprüche 1 bis 5, ferner umfassend den Schritt des Trocknens der beschichteten Oberfläche, bevor überschüssige Feststoffe entfernt wurden.

7. Verfahren nach den Ansprüchen 1 bis 6, wobei die erste beschichtete Oberfläche eine messbare erste Oberflächenrauheit aufweist, die zweite beschichtete Oberfläche eine messbare zweite Oberflächenrauheit aufweist und die zweite Oberflächenrauheit geringer als die erste Oberflächenrauheit ist.

8. Verfahren nach einem der Ansprüche 1 bis 7, wobei die gemessene Oberflächenrauheit des beschichteten Trägers vor dem Auftragen durch eine Oberflächenrauheit (Sa) zwischen 0,1 µm und 3,5 µm gekennzeichnet ist.

## Revendications

1. Procédé de fabrication d'un système de séparation de gaz, ledit procédé comprenant les étapes consistant à :
(a) fournir un support métallique poreux ayant une première surface et une seconde surface, chacune desdites surfaces étant opposée à l'autre pour définir ainsi une épaisseur de support, ladite première surface dudit support ayant une première taille de pores moyenne ;
(b) mettre en contact ladite première surface dudit support avec un premier matériau particulaire ayant une première taille de particule moyenne qui est inférieure à ladite première taille de pore moyenne pour former une première surface revêtue sur un support revêtu ;
(c) éliminer le premier matériau particulaire en excès de ladite première surface revêtue ;
(d) mettre en contact ladite première surface revêtue avec un second matériau particulaire ayant une seconde taille de particules moyenne inférieure à ladite première taille de particules moyenne pour former une seconde surface revêtue sur ledit support revêtu ;
(e) éliminer le second matériau particulaire en excès de ladite seconde surface revêtue ;
(f) déposer au moins une couche d'un métal sélectif au gaz pour recouvrir ladite première surface dudit support ; et
(g) recuire ledit support revêtu et ladite couche de métal sélectif au gaz dans lequel ledit recuit est effectué à une température qui favorise la croissance des grains du métal sélectif au gaz, et dans lequel ledit recuit a lieu en l'absence d'hydrogène jusqu'à ce que la température de recuit atteigne une température définie et en présence d'hydrogène lorsque la température est supérieure à la température de consigne, la température de consigne étant d'au moins 300°C.

2. Procédé selon la revendication 1, dans lequel au moins une desdites étapes de mise en contact est effectuée tout en appliquant un différentiel de pression d'une pression supérieure et d'une pression inférieure sur ladite épaisseur de support, ladite pression supérieure étant appliquée au côté de ladite première surface.

3. Procédé selon la revendication 1 ou la revendication 2, comprenant en outre une troisième étape de mise en contact, ladite troisième étape de mise en contact comprenant la mise en contact de ladite seconde surface revêtue avec un troisième matériau particulaire ayant une troisième taille de particule moyenne qui est inférieure à ladite seconde taille de particule moyenne pour former une troisième surface revêtue sur ledit support revêtu, ladite troisième étape de mise en contact ayant lieu avant ladite étape de dépôt.

4. Procédé selon l'une quelconque des revendications 1 à 3, dans lequel ledit premier matériau particulaire est choisi dans le groupe constitué par les catalyseurs de type coquille d'oeuf en métal noble, les métaux réfractaires, les oxydes inorganiques et leurs combinaisons, et ledit second matériau particulaire est choisi dans le groupe constitué par les catalyseurs de type coquille d'oeuf en métal noble, les métaux réfractaires, les oxydes inorganiques et leurs combinaisons.

5. Procédé selon l'une quelconque des revendications 1 à 4, dans lequel le matériau particulaire utilisé dans chaque étape de mise en contact peut être identique ou différent.

6. Procédé selon l'une quelconque des revendications 1 à 5, comprenant en outre l'étape consistant à sécher la surface revêtue avant que le matériau particulaire en excès ait été éliminé.

7. Procédé selon les revendications 1 à 6, dans lequel ladite première surface revêtue a une première rugosité de surface mesurable, ladite seconde surface revêtue a une seconde rugosité de surface mesurable et ladite seconde rugosité de surface est inférieure à ladite première rugosité de surface.

8. Procédé selon l'une quelconque des revendications 1 à 7, dans lequel la rugosité de surface mesurée du support revêtu avant ledit dépôt est **caractérisée par** une rugosité de surface (Sa) comprise entre 0,1 et 3,5 µm.
